# EUROPEAN PATENT SPECIFICATION

(11) **EP 2 951 062 B1**
(45) Date of publication and mention of the grant of the patent: **15.11.2017**
(21) Application number: 13873785.3
(22) Date of filing: 04.02.2013
(51) Int. Cl.: B60R 21/2165, B60R 21/36

(54) **AN AIRBAG HOUSING WITH WEAKENED SECTION**
AIRBAG-GEHÄUSE MIT SOLLBRUCHSTELLE
BOÎTIER DE COUSSIN DE SÉCURITÉ GONFLABLE AVEC SECTION AFFAIBLIE

(43) Date of publication of application: 09.12.2015
(73) Proprietor: Autoliv Development AB, 447 83 Vårgårda (SE)
(72) Inventor: KODRNJA, Stefan, S-44733 Vårgårda (SE)
(74) Representative: Sandstedt, Jonas Sven James
(86) International application number: PCT/SE2013/050088
(87) International publication number: WO 2014/120057

(56) References cited:
- EP-A1- 2 256 007
- EP-A2- 1 338 483
- EP-A2- 1 338 483
- FR-A1- 2 927 034
- GB-A- 2 433 055
- JP-A- 2006 213 153
- US-A- 5 669 627

## Description

### DESCRIPTION OF THE INVENTION

The present invention relates to an airbag container arranged for containing an airbag. The airbag container comprises a bowl-shaped part which in turn comprises an aperture running through an aperture plane, a first enclosing part and a second enclosing part. The aperture and the enclosing parts enclose an inner volume.

The first enclosing part and the second enclosing part are separated by at least one weakened wall portion where the first enclosing part has a first wall thickness and the second enclosing part has a second wall thickness where the enclosing parts meet said weakened wall portion.

Said weakened wall portion has a third wall thickness falling below the first wall thickness and the second wall thickness. The airbag container is arranged to be opened by the first enclosing part and the second enclosing part separating along said weakened wall portion.

Today, many vehicles are constructed to comprise at least one exterior airbag, intended to be inflated in the case of a collision with a pedestrian and to alleviate the collision force that the pedestrian is subject to.

Furthermore, in order to minimize the damages afflicted to the pedestrian in the event of such an impact, it has been proposed to use some kind of hood lifting arrangements. These arrangements are generally constructed such that the rear part of the hood, i.e. the part closest to the windscreen, is lifted in the event of a collision with a pedestrian. Such arrangements are for example disclosed in WO 2007/067 121 and EP 2 256 007.

It is desired to combine the above security arrangements such that when the hood is lifted, a pedestrian protection airbag is deployed through the aperture that is created between the rear part of the hood and the windscreen. The airbag is normally stored in a airbag container beneath the hood, and when the airbag is to be deployed the airbag container is opened. The airbag container, normally being a moulded plastic part, is opened along a weakened line in the airbag container structure, where the weakened line normally is in the form of an indent. However, in order to create such an indent in a airbag container during manufacturing, a movable part is necessary in the mould in order to be able to remove the tool after moulding.

The document EP 1338483 discloses an airbag container according to the preamble of claim 1. Such a movable part is undesirable since it slows up manufacturing, and is a part that might break and stall manufacturing for a certain time.

It is therefore an object of the present invention to provide an airbag container that is arranged to be opened along a weakened wall portion upon deployment of a contained airbag, where the weakened wall portion allows a less complicated manufacturing then previously known airbag containers of this kind.

Said object is achieved by means of an airbag container arranged for containing an airbag. The airbag container comprises a bowl-shaped part which in turn comprises an aperture running through an aperture plane, a first enclosing part and a second enclosing part. The aperture and the enclosing parts enclose an inner volume. The first enclosing part and the second enclosing part are separated by at least one weakened wall portion where the first enclosing part has a first wall thickness and the second enclosing part has a second wall thickness where the enclosing parts meet said weakened wall portion. Said weakened wall portion has a third wall thickness falling below the first wall thickness and the second wall thickness. The airbag container is arranged to be opened by the first enclosing part and the second enclosing part separating along said weakened wall portion.

At least a part of said weakened wall portion is constituted by an inclined wall part which has an inclination with reference to the first enclosing part and the second enclosing part where the first enclosing part and the second enclosing part meet the inclined wall part. The inclination is directed with respect to the aperture plane such that the inclination diverges towards the aperture plane.

According to an example, the airbag container comprises at least one further weakened wall portion, positioned between the first enclosing part and the second enclosing part. This further weakened wall portion has a longitudinal extension and a fourth wall thickness with a magnitude between, on one hand, the first wall thickness and the second wall thickness, and on the other hand, the third wall thickness. Said further weakened wall portion is arranged to remain whole when the airbag container is opened, and to function as a hinge.

According to another example, the airbag container is attached to the lower side of a vehicle hood.

Other examples are evident from the dependent claims.

A number of advantages are obtained by means of the present invention. Mainly, the manufacturing of the airbag container requires less complicated tools than before.

### BRIEF DESCRIPTION OF THE DRAWINGS

The present invention will now be described more in detail with reference to the appended drawings, where:
- Figure 1: shows a schematic side view of a vehicle;
- Figure 2: shows a schematic top view of the front part of a vehicle;
- Figure 3: shows a schematic side view of a vehicle with a raised hood;
- Figure 4: shows a schematic top view of the front part of a vehicle with an airbag according to the present invention inflated;
- Figure 5a: shows a schematic partial section view around the rear part of the hood during normal conditions;
- Figure 5b: shows an enlarged view of a weakened wall portion of an airbag container;
- Figure 6: shows a schematic partial section view around the rear part of the hood when the hood is raised and an airbag is being inflated;
- Figure 7: shows a side view of a closed airbag container;
- Figure 8: shows a side view of an opened airbag container;
- Figure 9: shows a detail view of a first step of a manufacturing process for the airbag container;
- Figure 10: shows a detail view of a second step of a manufacturing process for the airbag container;
- Figure 11: shows a detail view of a third step of a manufacturing process for the airbag container; and
- Figure 12: shows a sectional side view of a closed airbag container.

### DETAILED DESCRIPTION

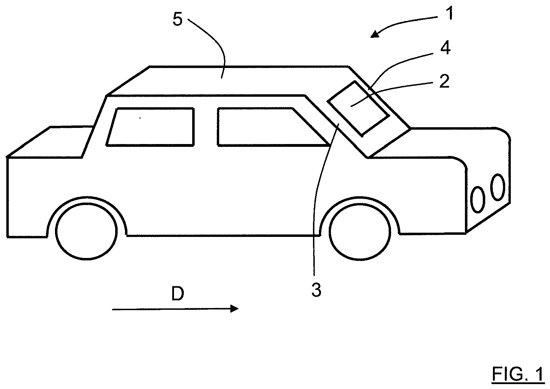

With reference to Figure 1 and Figure 2, showing a schematic side view and a schematic front part top view, a vehicle 1 comprises a windscreen 2 and so-called A-pillars; a first A-pillar 3 at a right-hand side of the windscreen 2 and a second A-pillar 4 at a left-hand side of the windscreen 2. The A-pillars are well-known in the field of vehicles, and run to a roof 5 of the vehicle 1. The right-hand side and left-hand side are defined when viewing along the vehicle in its forward running direction D. The vehicle 1 comprises an airbag container 6 that in turn comprises an airbag 7 and a first pyrotechnical charge 8, which are placed under a hood 9 comprised in the vehicle 1.

The airbag container 6 has a horizontal extension H and a vertical extension V, the vertical extension V facing the hood 9 when the airbag container 6 is mounted, and the horizontal extension H being orthogonal to the vertical extension V.

As shown in Figure 3, showing a schematic side view of the vehicle 1, the hood 9 is arranged to be lifted in the event of a collision with a pedestrian, increasing a distance between the hood and hard, non-flexible parts beneath the hood 9, e.g. an engine block. In this way, an undesired stiff pedestrian impact due to a close vicinity between the hood and such hard, non-flexible parts is avoided. In addition, the raising of the rear part of the hood 9 will make the surface of the hood 9 further inclined and contribute to a reduced speed of a body moving towards the windshield. An example of a hood raising mechanism will be described briefly later in the description.

With reference to Figure 4, showing a schematic front part top view of the vehicle 1, an instant later than the moment shown in Figure 3, the airbag 7 is deployed through an aperture 10 that is created between the rear part of the hood 9 and the windscreen 2 due to the lifting of the hood 9. The airbag is arranged in such a way that when inflated, it at least partly covers the windscreen 2 and the A-pillars 3, 4, where the windscreen 2 and the A-pillars 3, 4 constitute impact areas. In this way, the inflated airbag 7 relieves some of the impact force.

The airbag 7 and hood lifting security arrangements are thus combined such that when the hood 9 is lifted, a pedestrian protection airbag 7 is deployed through the aperture 10 that is created between the rear part of the hood 9 and the windscreen 2.

Figure 5a shows a schematic partial section view of the rear part of the hood 2, a part of the windscreen 2, a plenum part 11 and the airbag container 6 during normal conditions. The plenum part 11 is positioned between the windscreen 2 and the hood 9. As shown, the airbag 7 is normally stored in the airbag container 6 beneath the hood 9, the airbag container 6 here being attached to the lower side of the hood 9. A hood raising mechanism 12 is mounted at a position closer to the front than the airbag container 6, where the hood raising mechanism 12 comprises a housing 13 with an opening 13a facing the hood 2, a piston 14 and a second pyrotechnical charge 15. The piston 14 is attached to the hood 2 via a link arm 16, via the opening 13a in the housing 13.

In Figure 5a it is schematically indicated that the airbag container 6 has an inner volume S with a centre C.

Figure 6 shows the same view as Figure 5a, but here the second pyrotechnical charge 15 has been detonated 16 such the piston 14 has been displaced in a direction indicated by a piston arrow P, out from the housing 13 via the opening 13a. The displacement of the piston 14 results in a raised hood 2, as also shown in Figure 3.

Furthermore, the first pyrotechnical charge 8 has also been detonated 17, such that the airbag 7 is deployed via an opening 18 that is created in the airbag container 6.

With reference also to Figure 7 and Figure 8, showing a side view of the airbag container 6 only in the two positions shown in Figure 5 and Figure 6, the airbag container 6 is typically being a moulded plastic part. The airbag container 6 comprises a lid part 20 that is opened as a door part along a first horizontal weakened wall portion 19a and arcuate weakened wall side portions 19b (only one shown in Figure 7). When the lid part 20 is opened, said weakened wall portions 19a, 19b are broken along their longitudinal extensions such that a lid part 20 is formed and swung open along an opening direction 21, moving along a second horizontal weakened wall portion 22 in the airbag container structure. The second horizontal weakened wall portion 22 does not break as the other weakened wall portions 19a, 19b, but functions as a hinge.

As shown in Figure 6, the airbag is deployed through the opening 18 in the airbag container 6 and through the aperture 10 that has been created between the rear part of the hood 9 and the windscreen 2 by means of the raising of the hood 2.

All the weakened wall portions thus run between a first wall part 23, comprised in the lid part 20, and a second wall part 24 that forms the rest of the airbag container 6. As shown in Figure 7 and Figure 8, the lid part 20 comprises the first wall part 23 and the parts of the first horizontal weakened wall portion 19a and the arcuate weakened wall side portions 19b that remain after the opening of the lid part and thus after the breaking of said weakened wall side portions 19a, 19b. The tear sides 25, 26 are shown smooth in Figure 8, but may practically have an irregular shape.

Also with reference to Figure 5b, showing an enlarged part E of Figure 5a, the first wall part 23 has a first wall thickness t₁ and the second wall part has a second wall thickness t₂. In this example, the first wall thickness t₁ and the second wall thickness t₂ are essentially equal. The horizontal weakened wall portion 19a, in figure 5b forming an intermediate wall portion, and the arcuate weakened wall side portions 19b have a third wall thickness t₃ that falls below the first wall thickness t₁ and the second wall thickness t₂. The second horizontal weakened wall portion 22 has a fourth wall thickness t₄ with a magnitude between, on one hand, the first wall thickness t₁ and the second wall thickness t₂, and on the other hand, the third wall thickness t₃.

These wall thicknesses t₁, t₂, t₃, t₄ and the airbag container material are choosen such that, when the lid is opened, breakage occurs along the parts with the third wall thickness t₃, but not along the part with the fourth wall thickness t₄.

According to the present invention, the first horizontal weakened wall portion 19a and the arcuate weakened wall side portions 19b are in the form of an inclined wall part which is inclined with reference to the first wall part 23 and the second wall part 24 where the first wall part 23 and the second wall part 24 meet the horizontal weakened wall portion 19a and the arcuate weakened wall side portions 19b. The inclination is directed such that the first wall part 23 is positioned closer to the centre C of the airbag container than the second wall part 24, where the first wall part 23 and the second wall part 24 meet the inclined wall part.

This means that the inclination exists with reference to the first wall part 23 and the second wall part 24 at the area where the first wall part 23 and the second wall part 24 meet the weakened wall portions 19a, 19b. At this area, the first wall part 23 and the second wall part 24 may have mutually parallel extensions. At other parts of the container, the first wall part 23 and the second wall part 24 may have other extensions both relative each other and relative the inclined wall part 19a, 19b.

The present invention will now be described such that its benefits are made clear with reference to the partial Figure 9, Figure 10 and Figure 11, showing how the inclined wall and the surrounding wall parts are moulded. These Figures 9, 10 and 11 show a detail view of a first step, second step and a third step of a manufacturing process for the airbag container 6.

Figure 9 shows a first tool part 27 and a second tool part 28 which are in a position for receiving a plastic compound for moulding the airbag container; in particular the parts of the tool parts 27, 28 which are arranged for moulding the part of the airbag container comprising the inclined wall of the first horizontal weakened wall portion 19a and parts of the surrounding wall parts 23, 24 are shown.

In Figure 10, the plastic compound has been distributed between the tool parts 27, 28, for reasons of clarity there is a small distance between the tool parts 27, 28 and the plastic compound.

In Figure 11, the plastic compound has become rigid, and the second tool part 28 is removed in a tool removal direction R. It is understood from Figure 11, that after removal of the second tool part 28, the airbag container 6 may be removed from the first tool part 27. The moulding may for example be in the form of injection moulding.

By means of the design of the first horizontal weakened wall portion 19a and the arcuate weakened wall side portions 19b as described above, no movable part is required in the second tool part.

Generally, in order to accomplish this, only a weakened portion that would obstruct the removal of the second tool part 28 in the tool removal direction R needs to be designed as an inclined wall as described above. For example, the part 19b' of the arcuate weakened wall side portions 19b that has a longitudinal extension that coincides with the tool removal direction R does not need to be designed as inclined walls, although this part has been shown in that manner in this example.

The second horizontal weakened wall portion 22 does not obstruct the removal of the second tool part 28 in the tool removal direction R, and thus the second horizontal weakened wall portion 22 does not need to be designed as an inclined wall, and is shown as being designed as an indent in this example.

An example that more generally describes an airbag container 6 according to the present invention will now be described with reference to Figure 12. Figure 12 mainly presents a sectional view of Figure 7.

The airbag container 6 comprises a bowl-shaped part 32 which may be attached directly to the hood 9 as shown in Figure 5a and Figure 6. In Figure 5a and Figure 6, the bowl-shaped part 32 constitutes the airbag container 6. However, in Figure 12, the possibility of having an upper lid 33 is disclosed in Figure 12, the upper lid 32 and the bowl-shaped part 32 then together forming the airbag container 6.

The bowl-shaped part 32 in turn comprises an aperture 29 running through an aperture plane 30, a first enclosing part 23 and a second enclosing part 24. In this general example, the first wall part 23 is constituted by the first enclosing part 23, and the second wall part 24 is constituted by the second enclosing part 23. The enclosing parts are to be regarded as at least partially enclosing parts.

The aperture 29 and the enclosing parts 23, 24 enclose an inner volume S, the first enclosing part 23 and the second enclosing part 24 being separated by at least one weakened wall portion 19a, 19b; here the first horizontal weakened wall portion 19a is shown, and the arcuate weakened wall side portions 19b are only indicated with dashed lines.

The first enclosing part 23 has a first wall thickness t₁ and the second enclosing part 24 has a second wall thickness t₂ where the enclosing parts 23, 24 meet said weakened wall portion 19a, 19b. Said weakened wall portion 19a, 19b has a third wall thickness t₃ falling below the first wall thickness t₁ and the second wall thickness t₂. This means that said weakened wall portion 19a, 19b has a thinner wall than the surrounding enclosing parts 23, 24, at least where the enclosing parts 23, 24 adjoin said weakened wall portion 19a, 19b.

The container 6 is arranged to be opened by the first enclosing part 23 and the second enclosing part 24 separating along said weakened wall portion 19a, 19b. At least a part of said weakened wall portion 19a, 19b is constituted by at least one inclined wall part 19a, 19b having a certain inclination 31 with reference to the first wall part 23 and the second wall part 24 where the first wall part 23 and the second wall part 24 meet the inclined wall part 19a, 19b. The inclination 31 is also directed with respect to the aperture plane 30 such that the inclination 31 diverges towards the aperture plane 30, running through the aperture plane 30.

This means that the inclined wall part 19a, 19b has an inclination with respect to the enclosing parts 23, 24 where the enclosing parts 23, 24 adjoin said weakened wall portion 19a, 19b, and does thus not run parallel to any one of the enclosing parts 23, 24 at the adjoining positions, but possibly at other positions along the enclosing parts 23, 24.

The diverging shape of the inclination of the inclined part 19a, 19b with respect to the aperture plane 30 enables the second tool part 28 to be removed in the tool removal direction R as shown in Figure 11, the second tool part 28 then being removed via the formed aperture 29.

As shown in Figure 5a and Figure 6, the airbag container 6 is attached to the hood 9 with the aperture 29 directly facing the hood 9. However, as indicated above, it is possible to attach an upper lid 33 to the airbag container 6 such that the aperture 29 it least partially is closed. For example, the upper lid 33 may be attached to the hood 9, although other mounting possibilities exist.

The invention is not limited to the examples above, but may vary freely within the scope of the appended claims. For example, the first horizontal weakened wall portion 19a and the arcuate weakened wall side portions 19b may have any suitable shape. For example, the first horizontal weakened wall portion 19a may be slightly curved, and the arcuate weakened wall side portions 19b may instead comprise a horizontal part and a vertical part, joined at a 90° turn.

Alternatively, when the plastic compound has become rigid, the first tool part 27 may be removed in direction opposite the tool removal direction R shown in Figure 11. After removal of the first tool part 27, the airbag container 6 may be removed from the second tool part 28.

Any type of suitable material may be used in the airbag container 6 and its inner walls.

The airbag container 6 does not have to be arranged to contain a vehicle pedestrian airbag, but may be arranged to contain any type of airbag positioned at any suitable position.

The gas generator is generally constituted by an inflating device.

Terms such as equal and coincide are to be interpreted as falling within what is practical and obtainable in the situation, not as mathematical exact. The thicknesses t₁, t₂, t₃, t₄ may vary along their respective extensions, but should remain within the limits given previously.

## Claims

1. An airbag container (6) arranged for containing an airbag (7), the airbag container (6) comprising a bowl-shaped part (32) which in turn comprises an aperture (29) running through an aperture plane (30), a first enclosing part (23) and a second enclosing part (24), the first enclosing part (23) and the second enclosing part (24) being separated by at least one weakened wall portion (19a, 19b) where the first enclosing part (23) has a first wall thickness (t₁) and the second enclosing part (24) has a second wall thickness (t₂) where the enclosing parts (23, 24) meet said weakened wall portion (19a, 19b), said weakened wall portion (19a, 19b) having a third wall thickness (t₃) falling below the first wall thickness (t₁) and the second wall thickness (t₂), where the airbag container (6) is arranged to be opened by the first enclosing part (23) and the second enclosing part (24) separating along said weakened wall portion (19a, 19b), at least a part of said weakened wall portion (19a, 19b) is constituted by an inclined wall part (19a, 19b) which has an inclination (31) with reference to the first enclosing part (23) and the second enclosing part (24) where the first enclosing part (23) and the second enclosing part (24) meet the inclined wall part (19a, 19b), **characterized in that** said first enclosing part (23) and second enclosing part (24) having mutually parallel extensions and said first enclosing part (23) being positioned closer to a centre (C) of said container (6) than the second enclosing part (24) in the area where the enclosing parts (23, 24) meet said weakened wall portion (19a, 19b), and where the inclination (31) is directed with respect to the aperture plane (30) such that the inclination (31) diverges towards the aperture plane (30).

2. An airbag container (6) according to claim 1, **characterized in that** the airbag container (6) comprises at least one further weakened wall portion (22), positioned between the first enclosing part (23) and the second enclosing part (24), said further weakened wall portion (22) having a longitudinal extension and a fourth wall thickness (t₄) with a magnitude between, on one hand, the first wall thickness (t₁) and the second wall thickness (t₂), and on the other hand, the third wall thickness (t₃), where said further weakened wall portion (22) is arranged to remain whole when the airbag container (6) is opened, and to function as a hinge.

3. An airbag container (6) according to claim any one of the claims 1 or 2, **characterized in that** the airbag container (6) is arranged to be attached to the lower side of a vehicle hood (9).

4. An airbag container (6) according to claim any one of the previous claims, **characterized in that** the first enclosing part (23) and the second enclosing part (24) have mutually parallel extensions where the first enclosing part (23) and the second enclosing part (24) meet the inclined wall part (19a, 19b19a, 19b).

5. An airbag container (6) according to claim any one of the previous claims, **characterized in that** the airbag container (6) is arranged to contain a vehicle pedestrian airbag (7).

## Patentansprüche

1. Airbagbehälter (6), der so angeordnet ist, dass er einen Airbag (7) enthält, wobei der Airbagbehälter (6) einen napfförmigen Teil (32), der wiederum eine Öffnung (29) umfasst, die durch eine Öffnungsebene (30) verläuft, einen ersten Einfassungsteil (23) und einen zweiten Einfassungsteil (24) umfasst, wobei der erste Einfassungsteil (23) und der zweite Einfassungsteil (24) durch mindestens einen geschwächten Wandabschnitt (19a, 19b) getrennt sind, wobei der erste Einfassungsteil (23) eine erste Wanddicke (t₁) und der zweite Einfassungsteil (24) eine zweite Wanddicke (t₂) aufweist, wobei die Einfassungsteile (23, 24) auf den geschwächten Wandabschnitt (19a, 19b) treffen, wobei der geschwächte Wandabschnitt (19a, 19b) eine dritte Wanddicke (t₃) aufweist, die unter der ersten Wanddicke (t₁) und der zweiten Wanddicke (t₂) liegt, wobei der Airbagbehälter (6) so angeordnet ist, dass er dadurch geöffnet wird, dass sich der erste Einfassungsteil (23) und der zweite Einfassungsteil (24) entlang dem geschwächten Wandabschnitt (19a, 19b) trennen, zumindest ein Teil des geschwächten Wandabschnitts (19a, 19b) von einem geneigten Wandteil (19a, 19b) gebildet wird, der eine Neigung (31) bezogen auf den ersten Einfassungsteil (23) und den zweiten Einfassungsteil (24) aufweist, wobei der erste Einfassungsteil (23) und der zweite Einfassungsteil (24) auf den geneigten Wandteil (19a, 19b) treffen, **dadurch gekennzeichnet, dass** der erste Einfassungsteil (23) und der zweite Einfassungsteil (24) parallel zueinander verlaufen und der erste Einfassungsteil (23) in dem Bereich, in dem die Einfassungsteile (23, 24) auf den geschwächten Wandabschnitt (19a, 19b) treffen, näher an einem Mittelpunkt (C) des Behälters (6) platziert ist als der zweite Einfassungsteil (24) und wobei die Neigung (31) bezogen auf die Öffnungsebene (30) derart ausgerichtet ist, dass sich die Neigung (31) zur Öffnungsebene (30) hin wegbewegt.

2. Airbagbehälter (6) nach Anspruch 1, **dadurch gekennzeichnet, dass** der Airbagbehälter (6) mindestens einen weiteren geschwächten Wandabschnitt (22) umfasst, der zwischen dem ersten Einfassungsteil (23) und dem zweiten Einfassungsteil (24) platziert ist, wobei der weitere geschwächte Wandabschnitt (22) eine Längsausdehnung und eine vierte Wanddicke (t₄) in einer Höhe zwischen einerseits der ersten Wanddicke (t₁) und der zweiten Wanddicke (t₂) und andererseits der dritten Wanddicke (t₃) aufweist, wobei der weitere geschwächte Wandabschnitt (22) so angeordnet ist, dass er ganz bleibt, wenn der Airbagbehälter (6) geöffnet wird, und so, dass er als Klappgelenk dient.

3. Airbagbehälter (6) nach Anspruch 1 oder 2, **dadurch gekennzeichnet, dass** der Airbagbehälter (6) so angeordnet ist, dass er an der Unterseite einer Fahrzeugmotorhaube (9) angebracht wird.

4. Airbagbehälter (6) nach einem der vorhergehenden Ansprüche, **dadurch gekennzeichnet, dass** der erste Einfassungsteil (23) und der zweite Einfassungsteil (24) parallel zueinander verlaufen, wo der erste Einfassungsteil (23) und der zweite Einfassungsteil (24) auf den geneigten Wandteil (19a, 19b19a, 19b) treffen.

5. Airbagbehälter (6) nach einem der vorhergehenden Ansprüche, **dadurch gekennzeichnet, dass** der Airbagbehälter (6) so angeordnet ist, dass er einen Fahrzeug-Fußgängerairbag (7) enthält.

## Revendications

1. Contenant pour coussin de sécurité gonflable (6) agencé pour contenir un coussin de sécurité gonflable (7), le contenant pour coussin de sécurité gonflable (6) comprenant une partie en forme de cuvette (32), qui comprend à son tour une ouverture (29) s'étendant à travers un plan d'ouverture (30), une première partie d'encloisonnement (23) et une seconde partie d'encloisonnement (24), la première partie d'encloisonnement (23) et la seconde partie d'encloisonnement (24) étant séparées par au moins une portion de paroi affaiblie (19a, 19b), la première partie d'encloisonnement (23) présentant une première épaisseur de paroi (t₁) et la seconde partie d'encloisonnement (24) présentant une deuxième épaisseur de paroi (t₂), les parties d'encloisonnement (23, 24) rejoignant ladite portion de paroi affaiblie (19a, 19b), ladite portion de paroi affaiblie (19a, 19b) présentant une troisième épaisseur de paroi (t₃) inférieure à la première épaisseur de paroi (t₁) et la deuxième épaisseur de paroi (t₂), le contenant pour coussin de sécurité gonflable (6) étant agencé pour être ouvert par le fait que la première partie d'encloisonnement (23) et la seconde partie d'encloisonnement (24) se séparent le long de ladite portion de paroi affaiblie (19a, 19b), au moins une partie de ladite portion de paroi affaiblie (19a, 19b) étant constituée d'une partie de paroi inclinée (19a, 19b) qui présente une inclinaison (31) par rapport à la première partie d'encloisonnement (23) et la seconde partie d'encloisonnement (24), la première partie d'encloisonnement (23) et la seconde partie d'encloisonnement (24) rejoignant la partie de paroi inclinée (19a, 19b), **caractérisé en ce que** ladite première partie d'encloisonnement (23) et deuxième partie d'encloisonnement (23) présentent des extensions parallèles entre elles et ladite première partie d'encloisonnement (23) est positionnée plus près d'un centre (C) dudit contenant (6) que la seconde partie d'encloisonnement (23) dans la zone dans laquelle les parties d'encloisonnement (23, 24) rejoignent ladite portion de paroi affaiblie (19a, 19b), et l'inclinaison (31) étant dirigée par rapport au plan d'ouverture (30) de telle sorte que l'inclinaison (31) diverge vers le plan d'ouverture (30).

2. Contenant pour coussin de sécurité gonflable (6) selon la revendication 1, **caractérisé en ce que** le contenant pour coussin de sécurité gonflable (6) comprend au moins une autre portion de paroi affaiblie (22), positionnée entre la première partie d'encloisonnement (23) et la seconde partie d'encloisonnement (24), ladite autre portion de paroi affaiblie (22) présentant une extension longitudinale et une quatrième épaisseur de paroi (t₄) avec une grandeur comprise entre, d'une part, la première épaisseur de paroi (t₁) et la deuxième épaisseur de paroi (t₂), et d'autre part la troisième épaisseur de paroi (t₃), ladite autre portion de paroi affaiblie (22) étant agencée pour rester entière quand le contenant pour coussin de sécurité gonflable (6) est ouvert, et pour fonctionner comme charnière.

3. Contenant pour coussin de sécurité gonflable (6) selon l'une quelconque des revendications 1 ou 2, **caractérisé en ce que** le contenant pour coussin de sécurité gonflable (6) est agencé pour être fixé au côté inférieur d'un capot de véhicule (9).

4. Contenant pour coussin de sécurité gonflable (6) selon l'une quelconque des revendications précédentes, **caractérisé en ce que** la première partie d'encloisonnement (23) et la seconde partie d'encloisonnement (24) présentent des extensions parallèles entre elles, là où la première partie d'encloisonnement (23) et la seconde partie d'encloisonnement (24) rejoignent la partie de paroi inclinée (19a, 19b19a, 19b).

5. Contenant pour coussin de sécurité gonflable (6) selon l'une quelconque des revendications précédentes, **caractérisé en ce que** le contenant pour coussin de sécurité gonflable (6) est agencé pour contenir un coussin de sécurité gonflable (7) pour piéton d'un véhicule.
